# EUROPEAN PATENT APPLICATION

(11) **EP 4 559 313 A1**
(43) Date of publication of application: **28.05.2025**
(21) Application number: 23771899.4
(22) Date of filing: 18.07.2023
(51) Int. Cl.: A01N 25/02, A01N 65/44, C05F 5/00, C12N 1/20, C12N 1/38, A01P 21/00

(54) **CONDITIONING OF CORN STEEP LIQUOR TO PRODUCE HIGH ADDED VALUE ORGANIC MATTER FOR BIOSTIMULANT USE IN PLANTS**

(30) Priority: 21.07.2022 ES 202230671
(71) Applicant: Atlantica Agricola, S.A., 03400 Villena (Alicante) (ES)
(72) Inventor: NAVARRO MORILLO, Iván, 03400 Villena (Alicante) (ES); ZAVALA GONZÁLEZ, Ernesto Alejandro, 03400 Villena (Alicante) (ES); PÉREZ MILLÁN, Rafael, 03400 Villena (Alicante) (ES); TORTOSA MARTÍNEZ, José Luis, 03400 Villena (Alicante) (ES); HERNÁNDEZ MARTÍNEZ, Kevin, 03400 Villena (Alicante) (ES)
(74) Representative: Pons
(86) International application number: PCT/ES2023/070462
(87) International publication number: WO 2024/018105

(57) **Abstract**

The present invention relates to a method comprising the addition of a broad-spectrum preservative agent to a corn steep liquor, subsequent homogenization to resuspend all solids and mix the preservative appropriately. Then a thickening agent, previously diluted in an alcohol to ensure a good dispersion of same, is added, and everything is homogenized to give rise to a biostimulant corn steep liquor for use as high added value organic matter (biostimulant CSL) with a fertilizing effect.

## Description

The present invention relates to a method comprising the addition of a broad-spectrum preservative agent to a corn steep liquor, subsequent homogenization to resuspend all solids and mix the preservative appropriately. Then a thickening agent, previously diluted in an alcohol to ensure a good dispersion of same, is added, and everything is homogenized to give rise to a biostimulant corn steep liquor for use as high added value organic matter fertilizing effect.

### BACKGROUND OF THE INVENTION

Corn steep liquor (CSL) (CAS 66071-94-1) is the first by-product of the corn wet milling process. In that process, air-cleaned, shelled corn is soaked or steeped at a temperature of 45 to 50°C for 30 to 48 hours in water which initially contains about 0.1 to 0.2% sulfur dioxide. During the soaking process, the soluble components of the corn dissolve in the soaking liquid and the corn softens, thus facilitating the subsequent milling process.

The soaking liquid, sometimes called light soaking water, is separated from the softened corn and concentrated by evaporation to a solids content of about 50%; the resulting concentrate is known in the art as "heavy steep liquor" or more commonly as "corn steep liquor".

This high concentration of solids causes industrial handling problems, since these solids decant and bind together, forming 2 well-differentiated phases of uneven color, a caked brown mass at the bottom and a black liquid at the top. This in turn, makes the product more susceptible to fungal growth on the surface, spoiling the product and diminishing its qualities as a plant fertilizing ingredient.

Corn steep liquor contains dissolved minerals, carbohydrates and nitrogenous compounds from corn, as well as organic acids (particularly lactic acid) and modified corn proteins (amino acids and polypeptides) that result from the enzymatic activity associated with one or more spontaneous fermentations that take place during the corn steeping process.

Therefore, due to the high load of suspended solids and the richness in nutrients, corn steep liquor suffers industrial handling problems, such as gel formation, precipitate from suspended solids and various fungal contaminations. In such a way, several solutions to problems of industrialization and management of CSL have been proposed in the technical literature, such as in United States patent US4,440,792A, which claims a treatment with calcium complexing agents on CSL in order to avoid gelling of the product. US patent US2,515,157 describes the treatment of corn steep liquor with a source of aluminum ions as a precipitant for the naturally occurring phytate in the product. In this way, a nutrient liquid concentrate is formed for penicillin production by molds without phase separation or precipitates in the corn steep liquor. However, there is still no method to use without industrial handling problems of this material for its use as a fertilizer.

### DESCRIPTION OF THE INVENTION

In a first aspect, the present invention relates to a corn steep liquor (CSL) conditioning method for obtaining a biostimulant corn steep liquor (biostimulant CSL) that comprises the following steps:
a. stirring an amount of corn steep liquor at a speed between 300 rpm and 1000 rpm and, while maintaining in these conditions, adding a preservative, maintaining stirring after said addition;
b. dispersing a thickener in a solvent at a speed between 500 and 1000 rpm;
c. stirring the mixture obtained in (a) at a speed between 750 rpm and 1000 rpm and adding to same the mixture obtained in (b) and stirring for a time between 30 min and 120 min;
wherein the amount of preservative added in step (a) is between 0.1% and 1% by weight with respect to the total amount of final mixture after step (c), and wherein the amount of mixture obtained in (b) added in step (c) is between 1% and 2.5% by weight with respect to the total final mixture after step (c).

In the present invention, "corn steep liquor" is understood to mean any viscous liquid mixture by-product of the corn processing industry that consists entirely of the water-soluble components of corn steeped in said solvent and the suspended solids of which easily tend to bind together and precipitate. Furthermore, it is easily contaminated by fungi and other microorganisms that grow on the surface. This product corresponds to CAS number 66071-94-1.

Corn processing begins with a soak. Said soaking of the corn grain is performed by mixing the corn with water in open tanks at 45 to 52°C for 40 to 48 h. Sulfur dioxide (SO₂) is added to prevent fungal growth and help solubilize the material. The initial concentrations of SO₂ are between 0.1 and 0.2% by weight (pH 3.8 to 4.5) and decrease to 0.05% and 0.01% after 5 and 10 h, respectively.

A natural and spontaneous fermentation takes place in the steep water, where lactic acid bacteria populations increase as SO₂ concentrations decrease. This separates the starch from the gluten, solubilizes and breaks down proteins, and softens the corn for easier grinding. The corn steep liquor rich in amino acids and peptides is collected and concentrated to obtain a product characterized in that it comprises at least a mean of 35-45% by weight of total organic matter where said total organic matter comprises between 25-35% by weight of the total product of fulvic acids, 5-6% by weight of free amino acids, 15-25% by weight of total amino acids, group B vitamins between 8000-9000 micrograms/kilogram, 5-6% by weight of lactic acid and 0.1-0.5% by weight of betaine, where it also contains 3-4% by weight of total nitrogen and between 2-4% by weight of total potassium.

The advantage of the method due to the addition of a preservative and a thickener in these conditions is that it prevents the biostimulant corn steep liquor obtained from separating into phases and from undergoing rapid precipitation and binding of organic matter at the bottom of the tanks where it is stored, producing on one hand a precipitate, which is no longer easily recoverable at that time, and a loss of bioactive substances in the plant, causing a reduction in its performance as a fertilizer. Moreover, by its very nature, CSL is a product that is readily susceptible to microbiological contamination that can be stabilized using a preservative through by means of the present method, increasing its shelf life by a minimum of 2 years. If the process is not applied, it ends up giving rise to a CSL product that will finally decant, presenting a mean total organic matter of 30% by weight, where said organic matter comprises 20% by weight of the total fulvic acid product. At a speed greater than 1000 rpm in the described methods, too much air, which remains occluded, causing excess oxidation and increasing the volume of the product, generating problems in subsequent packaging, is introduced.

In a preferred embodiment of the method, the amount of corn steep liquor is between 900 kg and 999 kg.

In another preferred embodiment of the method, the stirring time of step (a) is at least 15 min. The final product after stirring has between 100 and 1000 cP (centipoise), preferably 300 cP, in such a way that with said range of viscosity there is a perfect balance between ease of industrial handling (the product is sufficiently fluid and can be moved well by any type of pump or packaging machine) and avoids the flocculation of suspended solids.

In another preferred embodiment of the method, additionally in step (a), water is added. Preferably water is added up to 100% by weight with respect to the total amount of corn steep liquor and preservative, in other words, at most the same amount by weight of water as the total corn steep liquor and preservative is added. And more preferably, water is added between 0.1% and 5% by weight with respect to the total amount of corn steep liquor and preservative. If the CSL comes with many lumps because it has flocculated during storage at the source or transport, it is advisable to add water to make it more fluid, facilitate the homogenization and incorporation of the rest of the components, in this way the stirrer crushes all the caked solids better, being well integrated to form the biostimulant CSL.

In another preferred embodiment, the preservative is selected from the following: octylisothiazolinone (OIT), (ethylenedioxy)dimethanol (EDDM), iodopropynyl butylcarbamate, phenoxyethanol, benzisothiazolinone, 2-(thiocyanomethylthio)-benzothiazole, orthophenylphenol, parachlorometacresol, methylchloroisothiazolinone, methylisothiazolinone, glutaraldehyde and any combination thereof. In a more preferred embodiment, the preservative is octylisothiazolinone and (ethylenedioxy)dimethanol.

In another preferred embodiment, the dispersion of the thickener from step (b) is performed in a stainless steel reactor. In this reactor, chemical interactions that reduce the stability of the product obtained are avoided, so its performance as a fertilizer is worse.

In another preferred embodiment, the thickener is selected from alginates, carraghenates, carob gum, guar gum, gum arabic, gum tragacanth, pectin, xanthan gum, microcrystalline cellulose, powdered cellulose, methyl cellulose, ethyl cellulose, hydroxypropyl cellulose, hydroxypropylmethyl cellulose, methyl ethyl cellulose, sodium carboxymethyl cellulose, ethyl hydroxyethyl cellulose, crosslinked sodium carboxymethyl cellulose and hydrolyzed sodium carboxymethyl cellulose, gelatin, agar-agar and alkali-activatable acrylic copolymer emulsion and any combination of the foregoing. Preferably alginates and xanthan gum.

In another more preferred embodiment, the solvent in which the thickener is dispersed is selected from water, glycerin, monopropylene glycol, butyl glycol, ethylene glycol, ethyl glycol, triethylene glycol, butyldiglycol, diethylene glycol, ethanol, methanol, isopropanol, alcohol ethoxylate, sodium polyacrylate and sorbitol.

In another preferred embodiment, the thickener is dispersed between 10% and 15% by weight in an amount of solvent between 85% and 90% by weight.

In another preferred embodiment, the thickener is sodium alginate and is dispersed between 10% and 15% by weight in an amount of ethanol as solvent between 85% and 90% by weight.

In another preferred embodiment, the thickener is xanthan gum and the solvent is monopropylene glycol and 10%-15 % by weight of xanthan gum is dispersed in 85%-90% by weight of monopropylene glycol.

In another embodiment, step (c) is performed in a Cowles type stirrer or a high shear homogenizer.

A second aspect of the invention relates to a biostimulant corn steep liquor characterized in that it comprises a homogeneous mixture of
- a corn steep liquor between 95% and 96.5% by weight;
- a preservative between 0.8% and 1.2% by weight;
- a mixture of solvent and thickener between 2% and 2.5% by weight; and
wherein it comprises between 35% and 45% by weight of total organic matter, wherein said total organic matter comprises between 25% and 35% by weight of the total fulvic acid product.

In the present invention, "organic matter" is understood to mean a compound or set of organic compounds formed mainly by carbon (C), hydrogen (H), oxygen (O) and nitrogen (N) in variable proportions and that are completely calcinable at 540°C following the official methods indicated in national fertilizer regulations.

In a more preferred embodiment, the organic matter further comprises a percentage by weight between 5% and 6% of free amino acids, between 15% and 25% by weight of total amino acids, group B vitamins between 8000-9000 micrograms/kilogram, between 5% and 6% by weight of lactic acid, and between 0.1% and 0.5% by weight of betaine, and wherein it further contains between 3% and 4% by weight of total nitrogen and between 2% and 4% by weight of total potassium.

In biostimulant corn steep liquor (biostimulant CSL), obtained by the previously described method, bioactive substances are preserved in said organic matter that produce benefits in plants, since, as discussed, compounds present in the biostimulant CSL organic matter that are not preserved in the untreated CSL product are preserved.

In another preferred embodiment, the biostimulant corn steep liquor further comprises an amount of water of up to 2% by weight in the homogeneous mixture.

In a more preferred embodiment, the organic matter is 40% by weight and wherein it comprises 30% by weight of fulvic acid.

A third aspect of the present invention relates to the use of the biostimulant corn steep liquor as a fertilizer. The advantage is that it significantly increases the leaf area, water use efficiency, increasing hormones such as indole acetic acid (IAA), trans-zeatin (tZ) and gibberellins GA1 and GA4, improving the leaf levels of nutrients such as magnesium, sulfur or iron, increasing nitrogen use efficiency and decreasing nitrates.

A fourth aspect of the present invention relates to a high added value organic matter fertilizer characterized in that it comprises the biostimulant corn steep liquor described above and there are added variable amounts of 5-60% by weight of stillage or molasses which may or may not be depotassified, a by-product of the manufacture of lysine, glutamic acid, starch hydrolysates, sucrose or dextrose syrups, baker's yeast, alcohols, lactic or citric acid.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples are provided by way of illustration and are not intended to limit the present invention.

### EXAMPLES

Next, the invention will be illustrated by means of assays carried out by the inventors that demonstrate the effectiveness of the product of the invention. All analyses of Examples 2 to 5 were repeated in triplicate and the results were statistically evaluated using a one-way analysis of variance, ANOVA, with a 95% confidence interval. Differences between treatment means were compared using Fisher's least significant difference (LSD) test at a 95% probability level. The significance levels were expressed as: * P < 0.05; ** P < 0.01; *** P < 0.001; NS not significant.

### Example 1

A corn steep liquor from the company Roquette is kept under gentle stirring at 300 rpm for 30 minutes so that it becomes homogeneous and then 0.2% w/w of EDDM is added, it is stirred for 10 min and 0.3% w/w of OIT is added. Moreover, the thickening dispersion, consisting of dispersing at high speed (500 rpm) 15% w/w xanthan gum in 85% w/w monopropylene glycol, is prepared.

At this point, the mixing speed of the corn steep liquor and preservatives is increased to a minimum of 750 rpm and a 1.5% w/w thickening dispersion is added. To carry out this process more efficiently, it is appropriate to have a Cowles type stirrer or a high shear homogenizer. The product is kept stirring for 2 hours or until no suspended lumps are observed.

### Example 2

A comparison is made between the leaf area after the use of the product obtained according to Example 1 (biostimulant CSL) and a corn steep liquor from the company Roquette (CSL) as a fertilizer in pepper plants. In addition, a third pepper plant to which no type of fertilizer is added is also used as a control plant (Control).

The indices described below were determined following the methodology of Marcelis *et al.* [Marcelis et al. Modelling biomass production and yield of horticultural crops: a review. Sci. Hort. 1998. 74: 83-111]. Leaf area was measured using a LI-COR brand optical reader, model LI-3000a. Leaf area index is the amount of leaf area per unit area of land surface.

**Table 1: Leaf area**

| **Treatments** | **Leaf area** (dm²) |
|---|---|
| Control | 10.35 ± 0.14c |
| Root biostimulant CSL | 12.61 ± 0.27^{a} |
| Root CSL | 12.13 ± 0.24b |
| *p*-value | 0.00075 |

The use of the biostimulant CSL significantly increases the leaf area with respect to the other treatments. An increase of about 4% with respect to CSL is observed. This difference can produce a significant improvement in the photosynthesis and transpiration capacity of the plants by increasing the light uptake area and the stomatal exposure surface.

### Example 3

A comparison is made between the photosynthesis efficiency after the use of the product obtained according to Example 1 (biostimulant CSL) and a corn steep liquor from the company Roquette (CSL) as a fertilizer in pepper plants. In addition, a third pepper plant to which no type of fertilizer is added is also used as a control plant (Control).

Measurements were recorded using a LICOR 6800 Portable Photosynthesis System Infrared Gas Analyzer (IRGA: LIQUOR Inc. Nebraska, USA). The intermediate leaves were placed in the measurement cuvettes under optimal growth conditions. Before use, the instrument was heated for 30 min and calibrated. Measurements used standard optimal cuvette conditions at 500 µmol m² s⁻¹ of photosynthetically active radiation (PAR), concentration of 400 µmol⁻¹ of CO₂, leaf temperature at 30°C and 60 % relative humidity. The net photosynthesis rate, the transpiration rate, and stomatal resistance were recorded simultaneously. The data was stored in the LICOR device and analyzed using the "Photosyn Assistant" software. Instantaneous water use efficiency (WUE) was calculated by dividing the net photosynthesis rate (A) by the corresponding transpiration rate (E) [Strasser R, Srivastava A, Tsimilli-Michael M 2000. The fluorescence transient as a tool to characterize and screen photosynthesis samples. In M. Yunus, U. Pathre, P. Mohanty, eds. Probing Photosynthesis: Mechanism, Regulation and Adaptation. London: Taylor & Francis, 443-480].

**Table 2: Photosynthesis efficiency (LiCOR-6400), net photosynthesis rate (A) and water use efficiency (WUE).**

| **Treatments** | **A** (µmol m⁻² s⁻¹) | **WUE** |
|---|---|---|
| Control | 3.84 ± 0.28b | 13.53 ± 0.32c |
| Root biostimulant CSL | 6.61 ± 0.89^{a} | 22.57 ± 0.78^{a} |
| Root CSL | 5.86 ± 0.72^{a} | 16.83 ± 1.29b |
| *p*-value | 0.002 | 0.00034 |

The biostimulant CSL significantly increases water use efficiency with respect to the other treatments. These results clearly show the biostimulant effect of biostimulant CSL on photochemical activity and photosynthesis efficiency in pepper plants, which would lead to an improvement in the metabolism of carbon essential for plant growth, since this physiological process generates compounds that supply energy and carbon skeletons for the synthesis of essential biomolecules for growth in all parts of the plant, such as hormones, amino acids, organic acids, secondary metabolism defense compounds, etc.

### Example 4

A comparison is made between the hormone profile after the use of the product obtained according to Example 1 (biostimulant CSL) and a corn steep liquor from the company Roquette (CSL) as a fertilizer in pepper plants. In addition, a third pepper plant to which no type of fertilizer is added is also used as a control plant (Control).

Indoleacetic acid (IAA), gibberellins (GA, GA1 + GA3 + GA4), Cytokinins (CKs: trans-zeatin (tZ) + isopentenyl adenine (iP)), and melatonin were analyzed according to Ghanem *et al.* [Ghanem et al. Hormonal changes during salinity-induced leaf senescence in tomato (Solanum lycopersicum L.). J. Exp. Bot. 2008, 59: 3039-3050] with some modifications. Briefly, 30 mg of dry lyophilized material was homogenized in 0.5 ml of a cold (-20°C) extraction mixture of methanol/water (80/20, v/v). The solids were separated by centrifugation (20,000 *g*, 15 min) and re-extracted for 30 min at 4°C in an additional 0.5 mL of the same extraction solution. Pooled supernatants were passed through the Sep-Pak Plus-C18 cartridge (SepPak Plus, Waters, USA). To remove the interfering lipids and part of the plant pigments, they were evaporated at 40°C under vacuum or until the organic solvent was removed. The residue was dissolved in 1 ml of methanol/water solution (20/80, v/v) using an ultrasonic bath. Dissolved samples were filtered through 13 mm diameter Millex filters with a 0.22 µm pore size nylon membrane (Millipore, Bedford, MA, USA). 10 µl of filtered extract were injected into a U-HPLC-MS system consisting of an Accela Series U-HPLC (ThermoFisher Scientific, Waltham, MA, USA) coupled to an Exact mass spectrometer (ThermoFisher Scientific, Waltham, MA, USA) using an heated electrospray ionization interface (HESI). Mass spectra were obtained using Xcalibur version 2.2 software (ThermoFisher Scientific, Waltham, MA, USA). For the quantification of plant hormones, calibration curves were constructed for each component analyzed (1, 10, 50 and 100 µg I⁻¹) and corrected for 10 µg I⁻¹ of deuterated internal standards. The recovery percentages varied between 92 and 95%.

**Table 3: Hormonal profile for the control sample and the plants that have used biostimulant CSL and IAA CSL as a fertilizer: Indoleacetic acid (auxin); Tz: trans-zeatin; Ip: isopentenyl adenine; GA: gibberellin; ABA: Abscisic acid; Jasm: Jasmonic acid; SA: Salicylic acid**

| | **Control** | **Root biostimulant CSL** | **Root CSL** | ***p-value*** |
|---|---|---|---|---|
| **IAA** | 1.47±0.07b | 2.22±0.38^{a} | 2.00±0.24^{a} | 0.00003 |
| **tZ** | 479±14b | 824±20^{a} | 817±19^{a} | 0.00024 |
| **GA1** | 0.31±0.03b | 0.52±0.03^{a} | 0.50±0.02^{a} | 0.00055 |
| **GA4** | 0.22±0.01b | 0.46±0.06^{a} | 0.41±0.03^{a} | 0.00085 |

The biostimulant CSL shows an increasing trend in the hormones: indoleacetic acid (IAA), trans-zeatin (tZ) and gibberellins GA1 and GA4 with respect to the other treatments. These results suggest a mechanism of action of CSL-B inducing the hormones responsible for cell elongation and division (mainly gibberellins and cytokinins) which would explain the improvement in plant growth by the application of said product.

### Example 5

A comparison is made between the concentration of different nitrogenous forms and nitrogen use efficiency after the use of the product obtained according to Example 1 (biostimulant CSL) and a corn steep liquor from the company Roquette (CSL) as a fertilizer in pepper plants. In addition, a third pepper plant to which no type of fertilizer is added is also used as a control plant (Control).

The determination of the concentration of nutrients P, K, Ca, Mg, S, Fe, Cu, Mn, Zn, Mo, and B was performed using ICP-OES. The leaf samples were subjected to a mineralization process following the method of Wolf [Wolf. A comprehensive system of leaf analyses and its use for diagnosing crop nutrient status. Commun. 1982, Soil Sci. Plant Anal. 13: 1035-1059). 0.2 g of dry leaves were taken and subjected to digestion with HNO₃ and H₂O₂ at 30% at 300°C and the mineralizate obtained was used for the analysis of ionic elements.

**Table 4: Total macronutrient concentration**

| **Treatments** | **Mg** (mg g⁻¹ PS) | **S** (mg g⁻¹ PS) |
|---|---|---|
| Control | 4.51 ± 0.23c | 4.05 ± 0.16c |
| Root biostimulant CSL | 6.68 ± 0.27^{a} | 5.15 ± 0.21^{a} |
| Root CSL | 5.66 ± 0.23b | 4.45 ± 0.18b |
| *p*-value | 0.00032 | 0.00012 |

The biostimulant CSL significantly increases leaf levels of magnesium and sulfur with respect to the other treatments. This improves the nutritional state of the plant, avoiding deficiencies and significantly influencing processes such as photosynthesis, biosynthesis of sulfur amino acids, chlorophyll formation, enzyme activation and protein synthesis.

For the determination of total N, 0.2 g of dry leaves were ground and mineralized with H₂SO₄ at 98% and H₂O₂ at 30%, at a temperature of 300°C and the mineralizate was used for N analysis. The total N concentration was determined by colorimetry based on the Berthelot reaction, according to the method described by Krom [Krom. Spectrophotometric determination of ammonia: a study of a modified Berthelot reaction using salicylate and dichloroisocyanurate. 1980, Analysis. 105: 305-316]. To determine the concentration of soluble NO₃⁻, an aqueous extraction was performed following the method of Cataldo *et al.* [Cataldo et al. Rapid colorimetric determination of nitrate in plant tissue by nitration of salicylic acid. 1975, Commun. Soil Sci. Plant Anal. 6: 71-80). The determination of NO₃⁻ was based on the colorimetric reaction formed by the binding of NO₃⁻with salicylic acid in a basic medium (Cataldo et al. 1975). Lastly, the calculation of nitrogen use efficiency (NutE) used the equation described by Xu *et al.* [Xu et al. Plant nitrogen assimilation and use efficiency. 2012. Annual review of plant biology, 63, 153-182), where NutE is defined as the ratio between biomass production and the amount of N in the leaves.

**Table 5: Concentration of different nitrogenous forms and nitrogen use efficiency**

| **Treatments** | **NO₃**⁻(mg g⁻¹ PF) | **Total N** (mg g⁻¹ PS) | **NutE** |
|---|---|---|---|
| Control | 14.21 ± 0.33b | 64.94±1.95 | 62.34 ± 1.87b |
| Root biostimulant CSL | 12.83 ± 0.63c | 64.95±1.95 | 103.06 ± 3.09^{a} |
| Root CSL | 16.14 ± 0.98^{a} | 63.47±1.90 | 100.36 ± 3.01^{a} |
| *p*-value | 0.00012 | NS | 0.00031 |

The biostimulant CSL significantly reduces nitrates with respect to the other treatments, maintaining total nitrogen levels and showing an increasing trend in nitrogen use efficiency (NutE). NUE is defined as the biomass production per unit of available N. This can be divided into two fundamental processes: (i) the capacity of the plant to absorb N from the soil (N uptake efficiency - NupE) and (ii) the efficient use of absorbed N, which is defined as the capacity of the plant to transfer and use this element in the biomass production of the different plant organs (N use efficiency - NutE). Therefore, a higher NutE could improve crop yield and quality, reducing economic costs and reducing environmental degradation caused by the application of N fertilizers. A greater activation of the nitrogen cycle enzymes could explain why a biostimulant CSL with lower nitrate values has a better assimilation of nitrogen and that has increased the biomass and other compounds.

## Claims

1. A corn steep liquor conditioning method to obtain a biostimulant corn steep liquor that comprises the following steps:
a. stirring an amount of corn steep liquor at a speed between 300 rpm and 1000 rpm and, while maintaining in said conditions, adding a preservative, maintaining stirring after said addition;
b. dispersing a thickener in a solvent at a speed between 500 and 1000 rpm;
c. stirring the mixture obtained in (a) at a speed between 750 rpm and 1000 rpm and adding to same the mixture obtained in (b) and stirring for a time between 30 min and 120 min;
wherein the amount of preservative added in step (a) is between 0.1% and 1% by weight with respect to the total amount of final mixture after step (c), and wherein the amount of mixture obtained in (b) added in step (c) is between 1% and 2.5% by weight with respect to the total final mixture after step (c).

2. The method according to claim 1, wherein the stirring time of step (a) is at least 15 min.

3. The method according to any of claims 1 or 2, wherein additionally in step (a), water is added.

4. The method according to any of claims 1 to 3, wherein the preservative is selected from the following: octylisothiazolinone, (ethylenedioxy)dimethanol, iodopropynyl butylcarbamate, phenoxyethanol, benzisothiazolinone, 2-(thiocyanomethylthio)-benzothiazole, orthophenylphenol, parachlorometacresol, methylchloroisothiazolinone, methylisothiazolinone, glutaraldehyde and any combination thereof.

5. The method according to claim 4, wherein the preservative is octylisothiazolinone and (ethylenedioxy)dimethanol.

6. The method according to any of claims 1 to 5, wherein the thickener is selected from alginates, carraghenates, carob gum, guar gum, gum arabic, gum tragacanth, pectin, xanthan gum, microcrystalline cellulose, powdered cellulose, methyl cellulose, ethyl cellulose, hydroxypropyl cellulose, hydroxypropylmethyl cellulose, methyl ethyl cellulose, sodium carboxymethyl cellulose, ethyl hydroxyethyl cellulose, crosslinked sodium carboxymethyl cellulose and hydrolyzed sodium carboxymethyl cellulose, gelatin, agar-agar and alkali-activatable acrylic copolymer emulsion and any combination of the foregoing.

7. The method according to any of claims 1 to 6, wherein the solvent in which the thickener is dispersed is selected from water, glycerin, monopropylene glycol, butyl glycol, ethylene glycol, ethyl glycol, triethylene glycol, butyldiglycol, diethylene glycol, ethanol, methanol, isopropanol, alcohol ethoxylate, sodium polyacrylate and sorbitol.

8. The method according to any of claims 1 to 7, wherein the thickener is sodium alginate and is dispersed between 10% and 15% by weight in an amount of ethanol as solvent between 85% and 90% by weight.

9. The method according to any of claims 1 to 7, wherein the thickener is xanthan gum and the solvent is monopropylene glycol and between 10% and 15% by weight of xanthan gum is dispersed in between 85% and 90% by weight of monopropylene glycol.

10. The method according to any of claims 1 to 9, wherein step (c) is performed in a Cowles type stirrer or a high shear homogenizer.

11. A biostimulant corn steep liquor described in any of claims 1 to 10, **characterized in that** it comprises a homogeneous mixture of
• a corn steep liquor between 95% and 96.5% by weight;
• a preservative between 0.8% and 1.2% by weight;
• a mixture of solvent and thickener between 2% and 2.5% by weight; and
wherein it comprises between 35% and 45% by weight of total organic matter, wherein said total organic matter comprises between 25% and 35% by weight of the total fulvic acid product.

12. The biostimulant corn steep liquor according to claim 11, wherein it further comprises a percentage by weight of: between 5% and 6% of free amino acids, between 15% and 25% of total amino acids, group B vitamins between 8000-9000 micrograms/kilogram, lactic acid between 5% and 6%, and betaine between 0.1% and 0.5%, and wherein it further contains between 3% and 4% of total nitrogen and between 2% and 4% of total potassium.

13. The biostimulant corn steep liquor according to any of claims 11 or 12, wherein it further comprises in the homogeneous mixture an amount of water of up to 2% by weight.

14. The biostimulant corn steep liquor according to any of claims 11 to 13, wherein the organic matter is 40% by weight and wherein it comprises 30% by weight of fulvic acid.

15. Use of the biostimulant corn steep liquor according to any of claims 11 to 14 as fertilizer.

16. A fertilizer, **characterized in that** it comprises the biostimulant corn steep liquor according to claims 11 to 14.

17. The fertilizer according to claim 16, wherein it further comprises between 5% and 60% by weight of stillage or molasses, which can be depotassified or not and concentrated or not, a by-product of the manufacture of lysine, glutamic acid, starch hydrolysates, sucrose or dextrose syrups, baker's yeast, alcohols, lactic or citric acid.
